# EUROPEAN PATENT SPECIFICATION

(11) **EP 3 599 887 B1**
(45) Date of publication and mention of the grant of the patent: **15.01.2025**
(21) Application number: 18712245.2
(22) Date of filing: 27.03.2018
(51) Int. Cl.: A23L 5/10, A23L 27/00, A23L 29/10, A23L 29/212, A23L 35/00, A23D 7/005, A23D 7/02

(54) **COOKING-AID FOR COATING AND FRYING A FOOD PRODUCT AND METHOD FOR MAKING SAID COOKING-AID**
KOCHHILFE ZUM BESCHICHTEN UND BRATEN EINES LEBENSMITTELPRODUKTS UND VERFAHREN ZUR HERSTELLUNG DER BESAGTEN KOCHHILFE
AIDE DE CUISINE PERMETTANT DE RECOUVRIR ET DE FRIRE UN PRODUIT ALIMENTAIRE ET PROCÉDÉ DE FABRICATION DUDIT AIDE DE CUISINE

(30) Priority: 31.03.2017 EP 17164082
(43) Date of publication of application: 05.02.2020
(73) Proprietor: Société des Produits Nestlé S.A., 1800 Vevey (CH)
(72) Inventor: GADDIPATI, Sanyasi, Beachwood OH 44122 (US); FEZER, Ramona Jasmin, 78224 Singen (DE); HANLE, Christoph, 78224 Singen (DE); MARITZ, Dirk Jacobus, 78224 Singen (DE); HARTTUNG, Lara, 78462 Konstanz (DE); SZURCZAK, Donata, 62-800 Kalisz (PL); SARKAR, Deblina, 78224 Singen (DE)
(74) Representative: Dinger, Hansjörg
(86) International application number: PCT/EP2018/057741
(87) International publication number: WO 2018/178059

(56) References cited:
- WO-A1-2016/012263
- WO-A1-2017/046301
- WO-A1-2017/089174
- US-A- 4 504 509

## Description

The present invention relates to a shelf-stable cooking-aid for coating and frying a food product in one step for example in a heating pan. Further aspects of the invention are the method for making said cooking-aid as well as a method for coating and frying a food product in a heated pan or on a heated surface.

It is well known to fry meat and/or vegetable in oil. There are also products on the market using a combination of different oils to achieve a beneficial effect regarding juiciness of meat, oil splattering and/or aroma release.

WO2016012263 discloses a shelf-stable cooking-aid for coating and frying a food product in one step for example in a heating pan, the cooking aid comprising 25-40 wt% oil, 35-65 wt% water, 10-25 wt% flour and/or starch, and emulsifier, and wherein the oil and water are in the form of an emulsion.

WO2017046301 discloses a flowable composition comprising a first starch which is gelatinized and a second starch which is an un-gelatinized starch for preparing savoury food products such as bouillons, condiments, seasonings, sauces, gravies, stews, pan-fried dishes or soups.

US4504509 discloses a liquid batter for use in coating foodstuffs prior to cooking comprising a blend of a substantially ungelatinized, highly crosslinked, high amylose starch and water.

Documents on cooking aids and food preparation compositions such as US6403144 describe food preparation compositions comprising an anti-stick agent, a flavour enhancing agent and an anti-foaming agent that can be used to prepare food, yet provide improved flavour, texture and aroma. WO2004/016090 describes a coating fat composition for producing a fry-like food without frying in oil. The fat composition is obtained by adding to a fat an agent capable of lowering the contact angle measured at ordinary temperature. However, these documents all fail to disclose a method for coating a food product at a same time as frying it. Hence, such final cooked foods do not have a coating after the frying.

Hence, the identified prior art describes an oil compositions for frying but not coating a food product. There appears to be no prior art which describes the key benefit of an all-in-one cooking aid which combines coating and frying in one single step, which is easy and convenient to handle by a consumer, e.g. in his home kitchen, and which delivers a coated pan-fried product.

Hence, there is a persisting need in the art and food industry to provide a better solution for a consumer for directly coating and frying a food product e.g. in his or her kitchen, the solution being more convenient for use than the solutions presently on the market, and preventing for example not melting and/or unnecessary splattering of oil during the frying step and/or creating of a film formation in the pan and/or burning/smoking without adding additionally oil to the pan.

### Summary of the invention

The object of the present invention is to improve the state of the art and to provide a more convenient and clean solution for coating and frying a food product for example in a heating pan in preferably only one single manipulation step by a user.

Particularly, the objective is to provide a composition with water and oil in the form of an emulsion: i) melting easily in a heated pan or heated surface; ii) does not splatter; iii) does not make use of a non-starch polysaccharides which may not be favourably perceived by consumers; iv) does not form film/ burnings by direct contact with a heated pan; v) is perceived as healthy/natural by the consumers; vi) has a natural appearance to consumer; vii) provides a coating to the ingredients after a pan frying product preparation; viii) can be distributed evenly on the ingredients of the final dish; ix) is discharging easily from the pack x) no additional need to add oil and/or fat to the pan;

The object of the present invention is achieved by the subject matter of the independent claims. The dependent claims further develop the idea of the present invention.

Accordingly, the present invention provides in a first aspect a shelf-stable cooking aid for coating and frying a food product, the cooking aid comprising:
i) oil in an amount of 3-18% by weight of the total composition;
ii) water in an amount of 40-58% by weight of the total composition;
iii) modified starch in an amount of 2-5% by weight of the total composition;
iv) salt in an amount of 3-9% by weight of the total composition;
v) sugar in an amount of 3-28% by weight of the total composition;
vi) flavourings in an amount of 5-40% by weight of the total composition;
vii) emulsifier in an amount of 0.4-2% by weight of the total composition;
and wherein the cooking aid has a viscosity in the range of 3 to 65 Pa.s at a shear rate of 1s⁻¹ at 25°C and the oil and water are in the form of an emulsion and wherein the emulsifier is selected from the group consisting of protein based emulsifier, whey protein, pea protein, potato protein, egg yolk, lecithin, mustard, soy lecithin, sunflower lecithin, sodium phosphates, sodium stearoyl lactylate, diacetyl tartaric ester of monoglyceride (DATEM), polyglycerol-polyricinoleate (PGPR), monoglyceride and mono-diglyceride or a combination thereof.

In a second aspect, the invention relates to a process for making the shelf-stable cooking aid of the present invention, comprising the steps of:
a) Mixing ingredients which are not heat sensitive and/or need a pasteurization step at a mixing speed of at least 1500rpm to form an emulsion;
b) Heating the mix from step a)to a temperature between 70-98°C;
c) pasteurizing the mix step b) at a temperature of at least 72°C, at a mixing speed in the range of 100-500rpm;
d) optional cooling the mix from step c) to a temperature below 50°C and further mixing ingredients which are heat sensitive and/or does not need a pasteurization step at a mixing speed in the range of 100-500rpm;
e) Filling the resulting cooking aid from step c) or step d) into packaging containers;
wherein the total amount of water from the different method steps adds up to 40-58 wt% of the cooking aid; and wherein the total amount of oil from the different method steps adds up to 3-18 wt% of the cooking aid and wherein the total amount of emulsifier from the different method steps adds up to 0.4-2wt% of the cooking aid and wherein the cooking aid has a viscosity in the range of 3 to 65 Pa.s at a shear rate of 1s⁻¹ at 25°C and wherein the oil and water are in form of an emulsion and wherein the emulsifier is selected from the group consisting of protein based emulsifier, whey protein, pea protein, potato protein, egg yolk, lecithin, mustard, soy lecithin, sunflower lecithin, sodium phosphates, sodium stearoyl lactylate, diacetyl tartaric ester of monoglyceride (DATEM), polyglycerol-polyricinoleate (PGPR), monoglyceride and mono-diglyceride or a combination thereof.

A third aspect of the invention relates to a method for coating and frying a food product in one single step, wherein the cooking aid of the present invention is melted in a heated pan or on a heated surface and the food product is directly fried in the cooking aid of the present invention without the addition of any further fat or oil.

A still further aspect of the invention pertains to a use of the cooking aid of the present invention for coating and frying a food product in one single step, wherein the cooking aid of the present invention is melted in a heated pan or on a heated surface and the food product is directly fried in the cooking aid of the present invention without the addition of any further fat or oil.

It has been surprisingly found by the inventors that when combining an emulsion between water and oil in a very specific ratio with a specific predetermined amount of a modified starch, a composition can be obtained having a viscosity in the range of 3 to 65 Pa.s at a shear rate of 1s⁻¹ at 25°C. This composition well melts upon direct in a heating pan or on a heating surface. In addition it binds to food products and upon direct frying of said food products in a heating pan or on a heating surface provides them with a nice coating. No additional oil or fat has to be added to the food product for frying, as the composition, i.e. the cooking aid of the present invention, already comprises enough oil for that frying step. The fact that the oil is embedded in a pasty emulsion with water and modified starch further substantially reduces oil splattering during the frying process as well no film formation and/or smoking and burning. This is a very simple, single manipulation step for a consumer which is very convenient, clean and provides the consumer with a good satisfactory result of a coated and fried food product.

### Detailed Description of the invention

The present invention pertains to a shelf-stable cooking aid for coating and frying a food product, the cooking aid comprising:
i) oil in an amount of 3-18% by weight of the total composition;
ii) water in an amount of 40-58% by weight of the total composition;
iii) modified starch in an amount of 2-5% by weight of the total composition;
iv) salt in an amount of 3-9% by weight of the total composition;
v) sugar in an amount of 3-28% by weight of the total composition;
vi) flavourings in an amount of 5-40% by weight of the total composition;
vii) emulsifier in an amount of 0.4-2% by weight of the total composition;
and wherein the cooking aid has a viscosity in the range of 3 to 65 Pa.s at a shear rate of 1s⁻¹ at 25°C and the oil and water are in the form of an emulsion and wherein the emulsifier is selected from the group consisting of protein based emulsifier, whey protein, pea protein, potato protein, egg yolk, lecithin, mustard, soy lecithin, sunflower lecithin, sodium phosphates, sodium stearoyl lactylate, diacetyl tartaric ester of monoglyceride (DATEM), polyglycerol-polyricinoleate (PGPR), monoglyceride and mono-diglyceride or a combination thereof.

The shelf-stable cooking aid is suitable for coating and frying a food product for example in a cooking pan, and this preferably in one single manipulation step by the cook or consumer.

By "shelf-stable" is meant that the said cooking aid can be safely stored at room temperature in a sealed pack. Particularly, the cooking aid can be safely stored for at least 6 months, preferably for at least 9 months, more preferably for at least 12 months at a room temperature of 25°C. Within the said shelf-stable period, the cooking aid maintains its organoleptic stability as well as its microbiological safety. During that period the cooking aid remains a paste to serve its described functionality.

In a preferred embodiment of the present invention, the cooking aid comprises oil in an amount of 5-18%, even more preferably from 7-15% by weight of the total composition.

In one embodiment, the oil of the present cooking aid is liquid at a room temperature of 25°C, preferably at a room temperature of 22°C.

In a preferred embodiment, the oil is a vegetable oil. Preferably, the oil is selected from the group consisting of palm oil, palm olein, olive oil, corn oil, sunflower oil, rice bran oil, soybean oil and canola oil, or a combination thereof. The advantage of having a vegetable oil in the cooking aid of the present invention is that such vegetable oils are more healthy and more appreciated by consumers than oils originating from many other origins such as milk fat, beef or pork fat.

The cooking aid of the present invention comprises water (total amount of moisture present) in an amount of 40-58% by weight of the total composition, even more preferably 45-58% by weight of the total composition.

In another preferred embodiment of the present invention, the cooking aid comprises modified starch in an amount of 2.3-4.5% by weight of the total composition.

The term "modified starch" refers to a physically modified or chemically modified starch, preferably physically modified starch which is high resistance to heat and shear or combination thereof. The modified starches may be from any source, such as corn, waxy corn, waxy maize, tapioca, corn, wheat, potato and rice and/or combinations thereof, and may be chemically-modified, physically-modified, or combinations thereof. Preferably physically modified starches are heat-moisture treated to improve the stability of the starch granule.

In one embodiment, the modified starch of the present cooking aid is in a gelatinized form. "Gelatinized" means that intermolecular hydrogen bonds of the modified starch molecules were broken down in the presence of water and heat, resulting in the disruption of the granular structure and the loss of birefringence.

Corresponding flours can also be used as a source of starch. Similar to the starches corresponding modified flours can be from the same botanical origin and variety. The person skilled in the art is calculating based on the amount of modified starch how much modified flour has to be used to fall within this invention.

The term "emulsifier" are selected from the group consisting of protein based emulsifier, whey protein, pea protein, potato protein, egg yolk, lecithin, mustard, soy lecithin, sunflower lecithin, sodium phosphates, sodium stearoyl lactylate, diacetyl tartaric ester of monoglyceride (DATEM), polyglycerol-polyricinoleate (PGPR), monoglyceride and mono-diglyceride or a combination thereof. In a more preferred embodiment the term "emulsifier" are selected from the group consisting of protein based emulsifier selected from whey protein, pea protein, potato protein or a combination thereof. The mentioned concentration of the protein in the protein based emulsifier is the total amount of protein. The person skilled in the art is calculating based on the amount of protein how much emulsifier has to be used to fall within this invention. In a further embodiment, the composition comprises emulsifier in an amount of 0.4-1% by weight of the total composition.

The cooking aid of the present invention comprises emulsifier selected from whey protein in an amount of 0.4-2% by weight of the total composition, even more preferably 0.4-1% by weight of the total composition.

In a preferred embodiment, the cooking aid of the present invention does not comprise a non-starch polysaccharide.

The term "non-starch polysaccharides" are selected from the group consisting of xanthan gum, guar gum, locust bean gum, carboxymethyl cellulose, alginate, pectin, agar, carrageenan and gelatin, or a combination thereof. Corresponding flours as a source of starch are not considered as a non-starch polysaccharide.

"Salt" refers to any suitable alkali metal salt or mixture thereof. In one embodiment the salt used in the composition is typically, but not limited to sodium chloride. For example, potassium chloride may be used or any low-sodium product having a taste impression of sodium chloride may be used, as long as the taste in the end formulation is acceptable. In a further embodiment, the composition comprises more preferably salt in the range from 5 to 7% by weight of the total composition.

"Sugar" refers to any sweetness given ingredient which are suitable for being used in a food product or food concentrate product. In one embodiment the sugar used in the composition is typically, but not limited to sucrose. Sugar can be any monosaccharide (glucose, fructose, galactose), disaccharide (sucrose, maltose, lactose) or oligosaccharide and/or any artificial sweeteners (stevia, aspartame, sucralose, neotame, acesulfame potassium, saccharin, advantame) or any combination thereof. Preferably sugar is honey, white sugar, braown sugar or any combination thereof.

The cooking aid of the present invention has a viscosity from 3 to 65 Pa.s at a shear rate of 1s⁻¹ at 25°C, measured by using a modular compact Rheometer (Physica MCR 300; measuring system ST24/1D-2V CC27), at a shear rate of 1s-1 at 25°C.. Preferably, the cooking aid has a viscosity from 3 to 60 Pa.s at a shear rate of 1s⁻¹ at 25°C, preferably from 4-60 Pa.s at a shear rate of 1s⁻¹ at 25°C, preferably from 5-60 Pa.s at a shear rate of 1s⁻¹ at 25°C, more preferably from 5-55 Pa.s at a shear rate of 1s⁻¹ at 25°C, more preferably from 8-50 Pa.s at a shear rate of 1s⁻¹ at 25°C. Cooking aids with higher viscosities, i.e. a viscosity above 65 Pa.s are not preferred for the cooking aid of the present invention. Cooking aids with lower viscosities than ca. 3 Pa.s are not preferred for the present invention as they are too liquid and not enough pasty anymore.

The viscosity of the free flowable composition has been measured by using a modular compact Rheometer (Physica MCR 300; measuring system ST24/1D-2V CC27), at a shear rate of 1s⁻¹ at 25°C.

The composition of the cooking aid of the present invention may further comprise a suitable organic acid that can help to improve and prolong the shelf-stability of the cooking aid. It is known in the art that food preservation techniques such as pasteurization, increasing acidity and decreasing variable water can limit the growth of microorganisms in foods. Examples of suitable organic acids which can be added to the cooking aid of the present invention are citric acid, lactic acid and/or acetic acid. The cooking aid of the present invention has a pH value from 5.0 to 3.0, preferably from 4.8 to 3.5

The water activity of the product is preferably below 0.92, preferably below 0.89, preferably between 0.6 and 0.92, preferably between 0.7 and 0.92, more preferably between 0.75 and 0.92.

The composition of the present cooking aid may also further comprise flavourings. The term "flavourings" in the context of the composition means flavouring agents, taste enhancing ingredients, herbs, spices, vegetables, meat and fish components (in wet or powder form), acidic components, caramel. Taste enhancing ingredients may be provided by monosodium glutamate (MSG), disodium ribonucleotides, vegetable protein hydrolysates or yeast extracts or combination thereof etc. Acidic components may be provided e.g. by citric acid, leomon juice (extracts) or vinegar (extracts) or combination thereof. Flavoring agents can include coriander, ingwer, lemongrass, cinnamon, curcuma, chili, paprika, mustard, garlic, onion, turmeric, tomato, coconut milk, cheese, parmesan, rosemary, curry powder, oregano, thyme, parsley, jalapeno pepper, white pepper powder and black pepper in wet or dry format. In a further embodiment, the composition comprises flavourings in an amount in the range of 10 to 40%, preferably between 10 to 35% by weight of the total composition.

The present invention pertains to a process for making the shelf-stable cooking aid of the present invention, comprising the steps of:
a) Mixing all ingredients which are not heat sensitive or need a pasteurization step at mixing speed of at least 1500rpm to form an emulsion;
b) Heating the mix from step a)to a temperature of between 70-98 °C;
c) pasteurizing the mix step b) at a temperature of at least 72°C, at mixing speed in the range of 100-500rpm;
d) optional cooling the mix from step c) to a temperature below 50°C and further mixing ingredients which are heat sensitive or does not need a pasteurization step at mixing speed in the range of 100-500rpm;
e) Filling the resulting cooking aid from step c) or step d) into packaging containers;
and wherein the cooking aid has a viscosity in the range of 3 to 65 Pa.s at a shear rate of 1s⁻¹ at 25°C and the oil and water are in the form of an emulsion.

Still further ingredients selected from the group consisting of organic acids may be added to the mixing in step a) and/or after the pasteurizing step d).

A further aspect of the present invention relates to a method for coating and frying a food product in one single step, wherein the cooking aid of the present invention is melted in a heated pan or on a heated surface and the food product is directly fried in the cooking aid of the present invention without the addition of any further fat or oil.

Preferably, the food product is a meat or a vegetable product or combination thereof.

The term "heated pan or on a heated surface" means that the pan or the surface has a temperature suitable for meat and/or vegetable frying. Temperatures between 100-170°C are preferred.

A still further aspect of the invention pertains to a use of the cooking aid of the present invention for coating and frying a food product in one single step, wherein the cooking aid of the present invention is melted in a heated pan or on a heated surface and the food product is directly fried in the cooking aid of the present invention without the addition of any further fat or oil.

Those skilled in the art will understand that they can freely combine all features of the present invention disclosed herein. In particular, features described for the product of the present invention may be combined with the methods of the present invention and vice versa. Further, features described for different embodiments of the present invention may be combined.

Further advantages and features of the present invention are apparent from the examples.

### EXAMPLES

The invention is further described with reference to the following examples. It will be appreciated that the invention as claimed is not intended to be limited in any way by these examples.

### Example 1:

The general procedure for preparing a shelf-stable cooking aid of the invention is as follows:
- Mixing all ingredients at speed of at least 1500 rpm to form an emulsion;
- heat the mix to a temperature of at least 70°C for at least 2 minutes;
- pasteurizing the mix at a temperature of at least 72°C, at mixing speed between 150 to 500 rpm for at least 5 minutes;
- fill the composition into containers.

Alternative the general procedure for preparing a shelf-stable cooking aid of the invention is as follows:
- Mixing all ingredients except the flavors and fresh spice pastes in order to prevent flavor and color losses at speed of at least 1500 rpm to form an emulsion;
- heat the mix to a temperature of at least 85°C for at least 2 minutes;
- pasteurizing the mix at a temperature of at least 75°C, at mixing speed between 150 to 500 rpm, preferably between 150 to 250 rpm, for at least 5 minutes;
- cooling down the mix to a temperature of 50°C or below at mixing speed between 150 to 500 rpm, preferably between 150 to 250 rpm;
- Mixing in the flavor and fresh spice pastes at speed of 1000 rpm to avoid lumping;
- fill the composition into containers.

### Example 2: Method of pan frying

- Preheat the pan for 1 min at high heat (above 100°C temperature of pan);
- Add 109g shelf-stable cooking aid;
- Wait 30 sec until sizzling starts;
- Add 400g sliced chicken breast and stir for 5 min at high heat;
- Add 500g sliced vegetables (100gr spring onions, 200g bell pepper, 200g pack choy) and stir for 5 min at high heat;

### Examples 3-24:

A composition according to the invention was prepared according to the general method as described in Example 1 using the amounts of ingredients in the following table and cooking it as described in example 2 evaluating the below listed attributes. 8 internal experienced panelists were used to rate the functional performance and the final food products of example 3-24.

| | Example 3 Reference | Example 4 | Example 5 | Example 6 | Example 7 |
|---|---|---|---|---|---|
| **Ingredient (%w/w)** | **Amount [%]** | **Amount [%]** | **Amount [%]** | **Amount [%]** | **Amount [%]** |
| Water | 48 | 48 | 48 | 48 | 48 |
| Salt | 5 | 5 | 5 | 5 | 5 |
| Sugars | 24 | 24 | 24 | 24 | 24 |
| Oil | 10 | 10 | 10 | 10 | 10 |
| Flavoring | 8.2 | 8.2 | 8.2 | 8.2 | 8.2 |
| Starch | 3.8 ⁽¹⁾ | 3.8⁽²⁾ | 3.8⁽³⁾ | 3.8⁽⁴⁾ | 3.8⁽⁵⁾ |

| | | | | | |
|---|---|---|---|---|---|
| Whey protein | 1 | 1 | 1 | 1 | 1 |
| Viscosity | 23.06 ± 2.89 | 47.42 ± 7.56 | 43.21 ± 7.97 | 28.55 ± 1.99 | 38.65 ± 2.69 |
| Aw | 0.882 | 0.881 | 0.885 | 0.886 | 0.880 |
| pH | 3.75 | 3.80 | 3.81 | 3.80 | 3.80 |
| Melting | Quick, sizzling | -1 (slower as ref) | -1 | 0 | 0 |
| Splattering | no | 0 | 0 | 1 (more as ref) | 0 |
| Film formation | no | 1 (more as ref) | 1 | 0 | 0 |
| Glazing of meat | Sticks to meat- not to pan | -1 (less as ref) | -1 | 0 | 0 |
| Smoking/burning | no | 1 (more as ref) | 1 | 0 | 0 |
| Coating of final dish | Well coated | 0 | 0 | -1 (less as ref) | 0 |
| Amount of sauce | Some sauce | -1 (less as ref) | -1 | 0 | 0 |
| Thickness of sauce | Some binding but not too thick | 1 (thicker as ref) | 1 | -1 (thinner as ref) | 0 |

| | Example 8 | Example 9 | Comp. Example 10 | Example 11 | Example 12 |
|---|---|---|---|---|---|
| **Ingredient (%w/w)** | **Amount [%]** | **Amount [%]** | **Amount [%]** | **Amount [%]** | **Amount [%]** |
| Water | 52 | 51 | 33 | 48 | 48 |
| Salt | 5 | 5 | 5 | 5 | 5 |
| Sugars | 13 | 14 | 24 | 24 | 24 |

| | | | | | |
|---|---|---|---|---|---|
| Oil | 10 | 10 | 25 | 10 | 10 |
| Flavoring | 15 | 15 | 8.2 | 8.2 | 8.2 |
| Starch | 4⁽¹⁾ | 4⁽¹⁾ | 3.8⁽¹⁾ | 3.8 ⁽¹⁾ | 2.3⁽¹⁾ |
| Whey Protein | 1 | 1 | 1 | 2 | 1.5 |
| Viscosity | 56.16 ± 3.59 | 18.31 ± 3.10 | 43.94 ± 1.89 | 24.76 ± 3.09 | 4.89 ± 1.29 |
| Aw | 0.900 | 0.894 | 0.832 | 0.885 | 0.884 |
| pH | 3.91 | 3.92 | 3.77 | 3.81 | 3.80 |
| Melting | -1 | 1 | -1 | -1 | +1 |
| Splattering | 0 | 0 | 0 | 0 | 0 |
| Film formation | 0 | 0 | 0 | 1 | 0 |
| Glazing of meat | na | na | na | -1 | -1 |
| Smoking/burning | 1 | 1 | 1 | 1 | 0 |
| Coating of final dish | na | na | na | 0 | 0 |
| Amount of sauce | na | na | na | -1 | +1 |
| Thickness of sauce | na | na | na | 1 | -1 |

| | Comp. Example 13 | Comp. Example 14 | Comp. Example 15 | Comp. Example 16 | Comp. Example 17 |
|---|---|---|---|---|---|
| **Ingredient (%w/w)** | **Amount [%]** | **Amount [%]** | **Amount [%]** | **Amount [%]** | **Amount [%]** |
| Water | 31 | 36 | 35.3 | 48 | 48 |
| Salt | 3.7 | 3.7 | 4.1 | 5 | 5 |
| Sugars | 23 | 13.3 | 14.7 | 24 | 23 |
| Oil | 9.5 | 10 | 10 | 10 | 10 |
| Flavoring | 29.5 | 34.1 | 32.9 | 8.2 | 7 |
| Starch | 2.7⁽¹⁾ | 2.5⁽¹⁾ | 2.4⁽¹⁾ | 1⁽¹⁾ | 6⁽¹⁾ |
| Maltodextrin | | | | 2.8 | |
| Whey protein | 0.6 | 0.4 | 0.6 | 1 | 1 |

| | | | | | |
|---|---|---|---|---|---|
| Viscosity | 48.94 ± 2.89 | 50.62 ± 2.45 | 47.33 ± 2.75 | 2.01 ± 0.99 | 82.14 ± 9.45 |
| Aw | 0.885 | 0.883 | 0.885 | 0.881 | 0.901 |
| pH | 3.81 | 3.81 | 3.81 | 3.8 | 3.76 |
| Melting | 0 | 0 | 0 | 1 | -2 |
| Splattering | 0 | 0 | 0 | 2 | 0 |
| Film formation | 0 | 0 | 0 | 0 | 2 |
| Glazing of meat | 0 | 0 | 0 | 0 | -2 |
| Smoking/burning | 0 | 0 | 0 | 1 | 2 |
| Coating of final dish | 0 | 0 | 0 | -1 | 0 |
| Amount of sauce | 0 | 0 | 0 | 0 | -2 |
| Thickness of sauce | 0 | -1 | -1 | -2 | 2 |

| | Comp. Example 18 | Comp. Example 19 | Comp. Example 20 | Comp. Example 21 | Comp. Example 22 |
|---|---|---|---|---|---|
| **Ingredient (%w/w)** | **Amount [%]** | **Amount [%]** | **Amount [%]** | **Amount [%]** | **Amount [%]** |
| Water | 48 | 48 | 48 | 48 | 25 |
| Salt | 5 | 5 | 5 | 5 | 5 |
| Sugars | 24 | 24 | 24 | 24 | 24 |
| Oil | 10 | 10 | 10 | 10 | 33 |
| Flavoring | 8.2 | 8.2 | 8.2 | 8.2 | 8.2 |
| Starch | 3.8⁽⁶⁾ | 3.8⁽⁷⁾ | 3.8⁽⁸⁾ | 3.8⁽⁹⁾ | 3.8⁽¹⁾ |
| Whey Protein | 1 | 1 | | 1 | 1 |
| Viscosity | 1.51 ± 0.05 | 3.09 ± 0.24 | 3.65 ± 0.02 | 2.39 ± 0.28 | 70.35 ± 1.17 |
| Aw | 0.884 | 0.884 | 0.887 | 0.888 | 0.780 |
| pH | 3.79 | 3.78 | 3.78 | 3.81 | 3.78 |
| Melting | 2 | 1 | 0 | 2 | 0 |
| Splattering | 3 | 0 | 0 | 0 | 0 |

| | | | | | |
|---|---|---|---|---|---|
| Film formation | 0 | 2 | 3 | 2 | 1 |
| Glazing of meat | 1 | 0 | 0 | -1 | na |
| Smoking/burning | 0 | 1 | na | 1 | 2 |
| Coating of final dish | -1 | 0 | na | 0 | na |
| Amount of sauce | 0 | 0 | na | 0 | na |
| Thickness of sauce | -1 | 1 | na | 1 | na |

| | Comp. Example 23 | Comp. Example 24 |
|---|---|---|
| **Ingredient (%w/w)** | **Amount [%]** | **Amount [%]** |
| Water | 33 | - |
| Salt | 5 | - |
| Sugars | 24 | - |
| Oil | 25 | 100 |
| Flavoring | 8.2 | - |
| Starch | 3.8⁽⁸⁾ | - |
| Whey Protein | 1 | - |
| Viscosity | 2.62 ± 0.03 | na |
| Aw | 0.834 | na |
| pH | 3.76 | na |
| Melting | 2 | 0 |
| Splattering | 0 | 2 |
| Film formation | 0 | 1 |
| Glazing of meat | na | -2 |
| Smoking/burning | 2 | 1 |
| Coating of final dish | na | -2 |
| Amount of sauce | na | na |
| Thickness of sauce | na | na |

| | | |
|---|---|---|
| (1) Physically modified corn starch (Novation 2300) (2) Physically modified tapioca starch (Novation 3300) (3) Chemically modified waxy corn starch (ColFlo 67 Vbl) (4) Physically modified waxy corn starch (Claria Plus) (5) Chemically modified waxy corn starch (CTex 06209 INS1422) (6) Chemically modified tapioca starch (National 104 Ingredion) (7) Rice starch (8) Corn starch (9) Waxy corn (ingredion Amioca TF) | | |

Example 3 is the reference example for all other tested examples 4-24. In case one of the examples 4-24 has shown a worse melting of the composition in a heated pan of -2 and/or a high splattering of 2 and/or film formation of 2 and/or a glazing of meat of -2 and/or a burning/smoking of 2 it is not desired for the scope of this invention. The performance of the composition in a heated pan is related to the viscosity of the composition. Only modified starches fulfil the performance of good/moderate melting, no/moderate splattering, no/moderate film formation, good glazing of meat and/or no/moderate burning/smoking in a viscosity range of 3 to 65 Pa.s at a shear rate of 1s⁻¹ at 25°C.

Example 3-7 are using different modified starches. Example 8-9 are two different recipes as can be shown on the viscosity using a low amount of sugar. Comp. Example 10 is a recipe with an amount of oil of 25wt%. Examples 11-15 are using different amount of starches and emulsifiers. Examples 16-24 are comparison examples. Example 16 shows a recipe with an amount of starch of 2wt%. Example 17 shows a recipe with an amount of starch of 6wt%. Examples 18-21 are using different starches. Examples 22-23 show comparison examples using high amounts of oil. Example 24 describes a traditional method of preparation using only oil for frying the meat and vegetables. In addition to the oil splattering the final prepared meat was very dry compared to all examples 3-15.

## Claims

1. A shelf-stable cooking aid for coating and frying a food product, the cooking aid comprising:
i) oil in an amount of 3-18% by weight of the total composition;
ii) water in an amount of 40-58% by weight of the total composition;
iii) modified starch in an amount of 2-5% by weight of the total composition;
iv) salt in an amount of 3-9% by weight of the total composition;
v) sugar in an amount of 3-28% by weight of the total composition;
vi) flavourings in an amount of 5-40% by weight of the total composition;
vii) emulsifier in an amount of 0.4-2% by weight of the total composition;
and wherein the cooking aid has a viscosity in the range of 3 to 65 Pa.s at a shear rate of 1s⁻¹ at 25°C, and the oil and water are in form of an emulsion and wherein the emulsifier is selected from the group consisting of protein based emulsifier, whey protein, pea protein, potato protein, egg yolk, lecithin, mustard, soy lecithin, sunflower lecithin, sodium phosphates, sodium stearoyl lactylate, diacetyl tartaric ester of monoglyceride (DATEM), polyglycerol-polyricinoleate (PGPR), monoglyceride and mono-diglyceride or a combination thereof.

2. The cooking aid according to claim 1, wherein the modified starch is a chemically and/or physically modified starch.

3. The cooking aid according to claim 1, wherein the modified starch is a physically modified starch.

4. The cooking aid according to any one of claims 1-3,
wherein the modified starch is in gelatinized form.

5. The cooking aid according to any one of claims 1-4,
wherein the emulsifier is a protein based emulsifier.

6. The cooking aid according to any one of claims 1-5,
wherein the emulsifier is selected from whey protein, pea protein, potato protein or a combination thereof.

7. The cooking aid according to one of the claims 1-6,
wherein the oil is a vegetable oil, preferably selected from the group consisting of palm oil, palm olein, olive oil, corn oil, sunflower oil, rice bran oil, soybean oil and canola oil, or a combination thereof.

8. The cooking aid according to any one of claims 1-7,
wherein the cooking aid does not include any non-starch polysaccharides.

9. Process for making a shelf-stable cooking aid according to one of the claims 1-8, comprising the steps of:
a) Mixing ingredients which are not heat sensitive and/or need a pasteurization step at a mixing speed in a range of at least 1500 rpm to form an emulsion;
b) Heating the mix from step a)to a temperature of between 70-98°C;
c) pasteurizing the mix step b) at a temperature of at least 72°C, preferably at least 80°C, at a mixing speed in the range of 100-500rpm;
d) optional cooling the mix from step c) to a temperature below 50°C and further mixing ingredients which are heat sensitive and/or does not need a pasteurization step at a mixing speed in the range of 100-500rpm;
e) Filling the resulting cooking aid from step c) or step d) into packaging containers;
and wherein the cooking aid has a viscosity in the range of 3 to 65 Pa.s at a shear rate of 1s⁻¹ at 25°C and the oil and water are in form of an emulsion.

10. The process according to claim 9, wherein further ingredients selected from the group consisting of organic acids are added to the mixing in step a) and/or step d).

11. Method for coating and frying a food product in one single manipulation step, wherein the food product is brought into contact with and heated together with the cooking aid according to one of the claims 1-8 in a heated pan or on a heated surface without the addition of any further fat or oil.

12. The method according to claim 11, wherein the food product is a meat and/or a vegetable product.

13. Use of the cooking aid according to one of the claims 1-8 for coating and frying a food product in one single manipulation step, by bringing the food product into contact with and heating together with the cooking aid in a heated pan or on a heated surface without the addition of any further fat or oil.

## Patentansprüche

1. Lagerstabile Kochhilfe zum Beschichten und Braten eines Lebensmittelprodukts, die Kochhilfe umfassend:
i) Öl in einer Menge von 3-18 Gew.-% der Gesamtzusammensetzung;
ii) Wasser in einer Menge von 40-58 Gew.-% der Gesamtzusammensetzung;
iii) modifizierte Stärke in einer Menge von 2-5 Gew.-% der Gesamtzusammensetzung;
iv) Salz in einer Menge von 3-9 Gew.-% der Gesamtzusammensetzung;
v) Zucker in einer Menge von 3-28 Gew.-% der Gesamtzusammensetzung;
vi) Aromen in einer Menge von 5-40 Gew.-% der Gesamtzusammensetzung;
vii) Emulgator in einer Menge von 0,4-2 Gew.-% der Gesamtzusammensetzung;
und wobei die Kochhilfe eine Viskosität in dem Bereich von 3 bis 65 Pa.s bei einer Scherrate von 1 s⁻¹ bei 25 °C aufweist und das Öl und das Wasser in Form einer Emulsion vorliegen, und wobei der Emulgator aus der Gruppe ausgewählt ist, bestehend aus einem Emulgator auf Proteinbasis, Molkenprotein, Erbsenprotein, Kartoffelprotein, Eigelb, Lecithin, Senf, Sojalecithin, Sonnenblumenlecithin, Natriumphosphaten, Natriumstearoyllactylat, Diacetylweinsäureester von Monoglycerid (DATEM), Polyglycerin-Polyricinoleat (PGPR), Monoglycerid und Monodiglycerid oder einer Kombination davon.

2. Kochhilfe nach Anspruch 1, wobei die modifizierte Stärke eine chemisch und/oder physikalisch modifizierte Stärke ist.

3. Kochhilfe nach Anspruch 1, wobei die modifizierte Stärke eine physikalisch modifizierte Stärke ist.

4. Kochhilfe nach einem der Ansprüche 1 bis 3, wobei die modifizierte Stärke in gelierter Form vorliegt.

5. Kochhilfe nach einem der Ansprüche 1 bis 4, wobei der Emulgator ein Emulgator auf Proteinbasis ist.

6. Kochhilfe nach einem der Ansprüche 1 bis 5,
wobei der Emulgator aus Molkenprotein, Erbsenprotein, Kartoffelprotein oder einer Kombination davon ausgewählt ist.

7. Kochhilfe nach einem der Ansprüche 1 bis 6,
wobei das Öl ein Pflanzenöl ist, vorzugsweise ausgewählt aus der Gruppe, bestehend aus Palmöl, Palm-Olein, Olivenöl, Maisöl, Sonnenblumenöl, Reiskleieöl, Sojabohnenöl und Rapsöl oder einer Kombination davon.

8. Kochhilfe nach einem der Ansprüche 1 bis 7, wobei die Kochhilfe keine Nicht-Stärke-Polysaccharide einschließt.

9. Prozess zum Herstellen einer lagerstabilen Kochhilfe nach einem der Ansprüche 1 bis 8, umfassend die Schritte:
a) Mischen von Zutaten, die nicht hitzeempfindlich sind und/oder einen Pasteurisierungsschritt benötigen, bei einer Mischgeschwindigkeit in einem Bereich von mindestens 1500 U/min, um eine Emulsion auszubilden;
b) Erhitzen der Mischung aus Schritt a) auf eine Temperatur zwischen 70-98 °C;
c) Pasteurisieren der Mischung Schritt b) bei einer Temperatur von mindestens 72 °C, vorzugsweise mindestens 80 °C, bei einer Mischgeschwindigkeit in dem Bereich von 100-500 U/min;
d) optionales Abkühlen der Mischung aus Schritt c) auf eine Temperatur unter 50 °C und weiteres Mischen von Zutaten, die hitzeempfindlich sind und/oder keinen Pasteurisierungsschritt benötigen, bei einer Mischgeschwindigkeit in dem Bereich von 100-500 U/min;
e) Abfüllen der resultierenden Kochhilfe aus Schritt c) oder Schritt d) in Verpackungsbehälter;
und wobei die Kochhilfe eine Viskosität in dem Bereich von 3 bis 65 Pa.s bei einer Scherrate von 1 s⁻¹ bei 25 °C aufweist und das Öl und das Wasser in Form einer Emulsion vorliegen.

10. Prozess nach Anspruch 9, wobei weitere Zutaten, ausgewählt aus der Gruppe, bestehend aus organischen Säuren, zu der Mischung in Schritt a) und/oder Schritt d) gegeben werden.

11. Verfahren zum Beschichten und Braten eines Lebensmittelproduktes in einem einzigen Handhabungsschritt, wobei das Lebensmittelprodukt mit der Kochhilfe nach einem der Ansprüche 1 bis 8 in einer erhitzten Pfanne oder auf einer erhitzten Oberfläche in Kontakt gebracht und zusammen mit dieser erhitzt wird, ohne die Zugabe von beliebigem weiterem Fett oder Öl.

12. Verfahren nach Anspruch 11, wobei das Lebensmittelprodukt ein Fleisch- oder ein Pflanzenprodukt ist.

13. Verwendung der Kochhilfe nach einem der Ansprüche 1 bis 8 zum Beschichten und Braten eines Lebensmittelprodukts in einem einzigen Handhabungsschritt, durch das Inkontaktbringen des Lebensmittelprodukts mit der Kochhilfe und zusammen mit dieser, Erhitzen in einer erhitzten Pfanne oder auf einer erhitzten Oberfläche, ohne die Zugabe von beliebigem weiterem Fett oder Öl.

## Revendications

1. Composition adjuvante de cuisine à longue conservation permettant d'enrober et de frire un produit alimentaire, la composition adjuvante de cuisine comprenant :
i) de l'huile en une quantité de 3 à 18 % en poids de la composition totale ;
ii) de l'eau en une quantité de 40 à 58 % en poids de la composition totale ;
iii) de l'amidon modifié en une quantité de 2 à 5 % en poids de la composition totale ;
iv) du sel en une quantité de 3 à 9 % en poids de la composition totale ;
v) du sucre en une quantité de 3 à 28 % en poids de la composition totale ;
vi) des agents aromatisants en une quantité de 5 à 40 % en poids de la composition totale ;
vii) un émulsifiant en une quantité de 0,4 à 2 % en poids de la composition totale ;
et dans laquelle l'adjuvant de cuisson a une viscosité comprise entre 3 et 65 Pa.s à un taux de cisaillement de 1 s⁻¹ à 25 °C, et l'huile et l'eau sont sous forme d'émulsion et dans laquelle l'émulsifiant est choisi dans le groupe constitué d'un émulsifiant à base de protéines, de protéines de lactosérum, de protéines de pois, de protéines de pomme de terre, de jaune d'œuf, de lécithine, la moutarde, de lécithine de soja, de lécithine de tournesol, de phosphates de sodium, de stéaryl de sodium lactylé, d'esters mono- et diacétyltartriques de mono- et diglycérides (DATEM), de polyricinoléate de polyglycérol (PGPR), de monoglycérides et mono-diglycérides, ou d'une combinaison de ceux-ci.

2. Composition adjuvante de cuisine selon la revendication 1, dans laquelle l'amidon modifié est un amidon chimiquement et/ou physiquement modifié.

3. Composition adjuvante de cuisine selon la revendication 1, dans laquelle l'amidon modifié est un amidon physiquement modifié.

4. Composition adjuvante de cuisine selon l'une quelconque des revendications 1 à 3, dans laquelle l'amidon modifié est sous forme gélatinée.

5. Composition adjuvante de cuisine selon l'une quelconque des revendications 1 à 4, dans laquelle l'émulsifiant est un émulsifiant à base de protéines.

6. Composition adjuvante de cuisine selon l'une quelconque des revendications 1 à 5,
dans laquelle l'émulsifiant est choisi parmi les protéines de lactosérum, les protéines de pois, les protéines de pomme de terre ou une combinaison de celles-ci.

7. Composition adjuvante de cuisine selon l'une des revendications 1 à 6,
dans laquelle l'huile est une huile végétale, de préférence choisie parmi le groupe constitué d'huile de palme, d'oléine de palme, d'huile d'olive, d'huile de maïs, d'huile de tournesol, d'huile de son de riz, d'huile de soja et d'huile de canola ou d'une combinaison de celles-ci .

8. Composition adjuvante de cuisine selon l'une quelconque des revendications 1 à 7, dans laquelle la composition adjuvante de cuisine ne comporte aucun polysaccharide non-amylacé.

9. Processus permettant de fabriquer une composition adjuvante de cuisine à longue conservation selon l'une des revendications 1 à 8, comprenant les étapes consistant à :
a) mélanger des ingrédients qui ne sont pas sensibles à la chaleur et/ou qui nécessitent une étape de pasteurisation à une vitesse de mélange dans une plage d'au moins 1 500 tr/mn pour former une émulsion ;
b) chauffer le mélange de l'étape a) à une température comprise entre 70 et 98 °C ;
c) pasteuriser le mélange de l'étape b) à une température d'au moins 72 °C, de préférence d'au moins 80 °C, à une vitesse de mélange dans la plage de 100 à 500 tr/mn ;
d) éventuellement refroidir le mélange de l'étape c) à une température inférieure à 50 °C et mélanger davantage des ingrédients qui sont sensibles à la chaleur et/ou qui ne nécessitent pas d'étape de pasteurisation à une vitesse de mélange dans la plage de 100 à 500 tr/mn ;
e) remplir la composition adjuvante de cuisine obtenue de l'étape c) ou de l'étape d) dans des contenants de conditionnement ;
et dans lequel la composition adjuvante de cuisine a une viscosité dans la plage de 3 à 65 Pa.s à un taux de cisaillement de 1 s⁻¹ à 25 °C et l'huile et l'eau sont sous la forme d'une émulsion.

10. Processus selon la revendication 9, dans lequel d'autres ingrédients choisis dans le groupe constitué d'acides organiques sont ajoutés au mélange de l'étape a) et/ou de l'étape d).

11. Procédé permettant d'enrober et de frire un produit alimentaire en une seule étape de manipulation, dans lequel le produit alimentaire est mis en contact et chauffé avec la composition adjuvante de cuisine selon l'une des revendications 1 à 8, dans une casserole chauffée ou sur une surface chauffée sans ajout de toute autre graisse ou huile.

12. Procédé selon la revendication 11, dans lequel le produit alimentaire est une viande et/ou un produit végétal.

13. Utilisation de la composition adjuvante de cuisine selon l'une des revendications 1 à 8 pour enrober et frire un produit alimentaire en une seule étape de manipulation, par la mise en contact et le chauffage du produit alimentaire avec la composition adjuvante de cuisine dans une casserole chauffée ou sur une surface chauffée sans ajout de toute autre graisse ou huile.
